# EUROPÄISCHE PATENTSCHRIFT

(11) **EP 1 104 645 B1**
(45) Veröffentlichungstag und Bekanntmachung des Hinweises auf die Patenterteilung: **05.02.2003**
(21) Anmeldenummer: 99940134.2
(22) Anmeldetag: 03.08.1999
(51) Int. Cl.: H04R 25/00, H04B 15/04

(54) **HÖRGERÄT MIT EINER EINRICHTUNG ZUR UNTERDRÜCKUNG VON ELEKTROMAGNETISCHEN STÖRSIGNALEN SOWIE VERFAHREN ZUR UNTERDRÜCKUNG VON ELEKTROMAGNETISCHEN STÖRSIGNALEN IN HÖRGERÄTEN**
HEARING AID COMPRISING A DEVICE FOR SUPPRESSING ELECTROMAGNETIC INTERFERENCE SIGNALS AND METHOD FOR SUPPRESSING ELECTROMAGNETIC INTERFERENCE SIGNALS IN HEARING AIDS
PROTHESE AUDITIVE POURVUE D'UN DISPOSITIF PERMETTANT DE SUPPRIMER LES SIGNAUX PARASITES ELECTROMAGNETIQUES, ET PROCEDE PERMETTANT DE SUPPRIMER LESDITS SIGNAUX DANS LES PROTHESES AUDITIVES

(30) Priorität: 13.08.1998 DE 19836784
(43) Veröffentlichungstag der Anmeldung: 06.06.2001
(73) Patentinhaber: Siemens Audiologische Technik GmbH, 91058 Erlangen (DE)
(72) Erfinder: SIGWANZ, Ullrich, D-91052 Erlangen (DE)
(74) Vertreter: Berg, Peter, Dipl.-Ing.
(86) Internationale Anmeldenummer: EP9905631
(87) Internationale Veröffentlichungsnummer: WO00010363

(56) Entgegenhaltungen:
- EP-A- 0 800 331
- EP-A- 0 835 041
- EP-A- 0 843 427
- WO-A-96/37086

## Beschreibung

Die Erfindung betrifft ein Hörgerät mit einem Mikrofon, einer Signalverarbeitungseinheit und einem Hörer. Ferner betrifft die Erfindung ein Verfahren zur Unterdrückung von elektromagnetischen Störsignalen in einem Hörgerät dieser Art.

Die Signalverarbeitung in Hörgeräten kann durch elektromagnetische Störsignale, z. B. durch Störfelder von Mobiltelefonen beeinträchtigt werden. Eine Verbesserung der elektromagnetischen Verträglichkeit (EMV) von Hörgeräten z. B. durch Leiterbahnoptimierung und kapazitive Abschirmung von Mikrofonen kann die Störempfindlichkeit nicht beseitigen.

Aus der EP 0 843 427 A1 ist ein System bekannt, bei dem zur Unterdrückung periodischer elektromagnetischer Störsignale adaptive Kammfilter verwendet werden. Um das Nutzsignal möglichst wenig zu beeinträchtigen, ist es erforderlich, die Grenzfrequenzen und Bandbreiten des Kammfilters möglichst genau an das Störsignal anzupassen.

Der Erfindung liegt die Aufgabe zugrunde, ein Hörgerät sowie ein Verfahren anzugeben, bei dem Störsignale und Störfelder zuverlässig unterdrückt werden.

Die Aufgabe wird für das Hörgerät durch die Merkmale des Patentanspruchs 1 gelöst. Vorteilhafte Ausführungsformen des Hörgeräts sind in den Ansprüchen 2 bis 5 gekennzeichnet. Hinsichtlich des Verfahrens wird die Aufgabe durch die Merkmale des Patentanspruchs 6 gelöst. Vorteilhafte Verfahrensvarianten sind in den Ansprüchen 7 bis 10 gekennzeichnet.

Unter dem Begriff "Hörgerät" werden sowohl separate, am Kopf oder Körper tragbare Hörgeräte, wie hinter dem Ohr tragbare Hörgeräte, im Ohr tragbare Hörgeräte, Taschenhörgeräte und auch implantierbare Hörhilfegeräte, verstanden.

Beim erfindungsgemäßen Hörgerät wird zunächst über ein Detektorelement festgestellt, ob elektromagnetische Störsignale oder Störfelder vorliegen. Falls dies der Fall ist, wird in Abhängigkeit vom Typus der erkannten Störsignale ein Filterelement konfiguriert, um die Störfelder zu unterdrücken. Damit kann eine an den jeweiligen Typus des Störfeldes angepasste und damit besonders wirksame Herausfilterung der Störsignale stattfinden. Des weiteren wird im Filterelement beispielsweise ein Kammfilter konfiguriert, dessen Filtercharakteristik exakt an das jeweilige Störsignal angepasst ist. Zur Konfiguration des Kammfilters kann der Systemtakt des Hörgeräts verwendet werden. Außerdem umfasst das erfindungsgemäße Hörgerät ein Taktelement zur Gewinnung der Frequenz des durch das Detektorelement erfassten Störsignals. Die gewonnene Frequenz des Störsignals wird dann zur Generierung der Systemtaktfrequenz, insbesondere durch Frequenzvervielfachung, verwendet. Damit wird ausgehend von der aktuellen Frequenz des Störsignals die Systemtaktfrequenz neu generiert. Die z.B. durch Alterung oder Drift veränderte und verfälschte Taktfrequenz des Systemtaktelements des Hörgeräts kann abgeschaltet werden und es kann zum Betrieb und insbesondere zur Konfigurierung des Filterelements die neu generierte und aus der Frequenz des Störsignals abgeleitete Systemtaktfrequenz verwendet werden. Hierdurch entsteht ein besonders präzis konfiguriertes Filterelement, welches die festgestellten Störsignale besonders wirkungsvoll unterdrücken kann.

Wenn das Taktelement eine PLL-Schaltung ("phase-locked-loop") besitzt, kann die generierte Systemtaktfrequenz als rationales Vielfaches der isolierten und gewonnenen Störsignalfrequenz generiert werden.

Über ein Umschaltelement kann zwischen dem Taktelement und dem Systemtaktelement gewechselt werden, so dass nach Generierung der neuen Systemtaktfrequenz das bisherige Systemtaktelement abgeschaltet und das Hörgerät insbesondere zur Erzeugung einer passenden Filtercharakteristik mit der abgeleiteten und neuen Systemtaktfrequenz betrieben werden kann.

Das erfindungsgemäße Hörgerät ist in digitaler Bauweise ausgeführt. Es besitzt zur besonders präzisen und variantenreichen Signalverarbeitung ein DSP-Element (digitales Signalprozessor-Element). Dabei kann das Filterelement zur Unterdrückung der Störsignale in das DSP-Element integriert sein oder aber zur besonders wirkungsvollen Störungsunterdrückung am Ende der Signalübertragungskette, z.B. direkt vor dem D/A-Wandler, angeordnet sein.

Beim erfindungsgemäßen Verfahren findet nach der Detektion von Störsignalen eine Konfiguration eines Filterelements in Abhängigkeit von den detektierten Störsignalen zur angepassten Unterdrückung der Störsignale statt. Die Störsignalunterdrückung ist besonders wirkungsvoll, wenn gemäß der Erfindung zunächst die Frequenz des Störsignals gewonnen und isoliert wird und dann insbesondere durch Frequenzvervielfachung die Systemtaktfrequenz erzeugt wird. Durch diese generierte Systemtaktfrequenz kann die Konfiguration des Filterelements (z.B. Hochpass, Tiefpass, Kammfilter, FFT) besonders präzise erfolgen, da nicht auf den u.U. wegen Alterung oder Drift verfälschten Systemtakt des Hörgeräts zurückgegriffen wird.

Somit erzeugt das Störsignal selbst eine geeignete Filterung zur Unterdrückung des Störsignals.

Das erfindungsgemäße Verfahren dient insbesondere zur Unterdrückung von elektromagnetischen Störsignalen von Mobiltelefonen (z.B. nach dem GSM- oder DECT-Standard) und zur Erfassung der Störcharakteristiken bekannter Mobilfunknetze (z.B. D1-, D2-, E-, E-plus Netz).

Wenn das Hörgerät mit einer Telefonspule betrieben wird, können auch im Zusammenhang mit der Netzfrequenz auftretende elektromagnetische Störfelder detektiert und unterdrückt werden.

Zusätzlich kann das Detektorelement dazu verwendet werden, z.B. das Klingeln oder die Aktivierung des Mobiltelefons aufgrund der entstehenden Frequenzsignale festzustellen und direkt im Hörgerät bemerkbar zu machen.

Die Erfindung ist anhand eines Ausführungsbeispiels in der Zeichnungsfigur näher erläutert.

Das Prinzipschaltbild zeigt ein Hörgerät mit einem Mikrofon 1, einer Signalverarbeitungseinheit 8 und einem Hörer 7. In der Signalverarbeitungsstrecke zwischen Mikrofon 1 und Hörer 7 sind der D/A-Wandler 5, der Vorverstärker 2, das DSP-Element 3, der Nachverstärker 4 und der D/A-Wandler 6 angeordnet.

Über das Detektorelement 12 empfängt das Hörgerät das elektromagnetische Störsignal 14 und detektiert somit das Vorhandensein z.B. eines GSM-Telefons im D1-Netz. Das Detektorelement 12 übermittelt die Information über den festgestellten Störfeldtypus (also GSM-Telefon, D1-Netz) an das DSP-Element 3, wodurch eine an den festgestellten Störfeldtypus angepasste Konfiguration des Filterelements 13 zur besonders wirksamen Störfeldunterdrückung stattfinden kann.

Das Filterelement 13 kann wie abgebildet im DSP-Element 3 integriert sein oder aber zur besonders wirkungsvollen Störfeldunterdrückung am Ende der Signalübertragungskette zwischen Mikrofon 1 und Hörer 7, insbesondere nach dem Nachverstärker 4 und vor dem D/A-Wandler 6 angeordnet sein (nicht abgebildet).

Beim abgebildeten Hörgerät wird die Information über den detektierten Störfeldtypus vom Detektorelement 12 an das Taktelement 11 weitergereicht, welches insbesondere eine PLL-Schaltung aufweist. Im Taktelement 11 wird die Frequenz des Störfeldes gewonnen und isoliert und wird durch Frequenzvervielfachung der üblicherweise durch das Systemtaktelement 10 bereitgestellte Systemtakt neu generiert. Wenn z.B. das Störsignal eine Frequenz von 200 Hz aufweist, welche isoliert wurde, kann durch Frequenzvervielfachung mit dem Faktor 100 eine Systemtaktfrequenz von 20 kHz erzeugt werden, die durch Betätigung des Umschaltelements 9 unter Abschaltung des Systemtaktelements 10 direkt zur Taktung des DSP-Elements 3 dient. Damit kann durch den neu generierten Systemtakt des Taktelements 11 im Filterelement 13 eine besonders wirkungsvolle Störfeldunterdrückung stattfinden.

Der u.U. z.B. wegen Alterung oder Temperaturdrift verfälschte Takt des Systemtaktelements 10 ist abgeschaltet, so dass eine fehlerhafte Konfiguration des Filterelements 13 durch einen verfälschten Systemtakt vermieden wird.

Das Taktelement 11 erhält vom DSP-Element 3 notwendige Informationen z.B. zur Generierung des Systemtaktes. Durch Frequenzvervielfachung kann der Systemtakt entweder exakt oder mit einer geringen Abweichung generiert werden.

Die abgespeicherten Koeffizientensätze können aktualisiert werden und umfassen sämtliche Daten- oder Stellgrößen, die für eine wirkungsvolle Entstörung durch das Filterelement 13 benötigt werden.

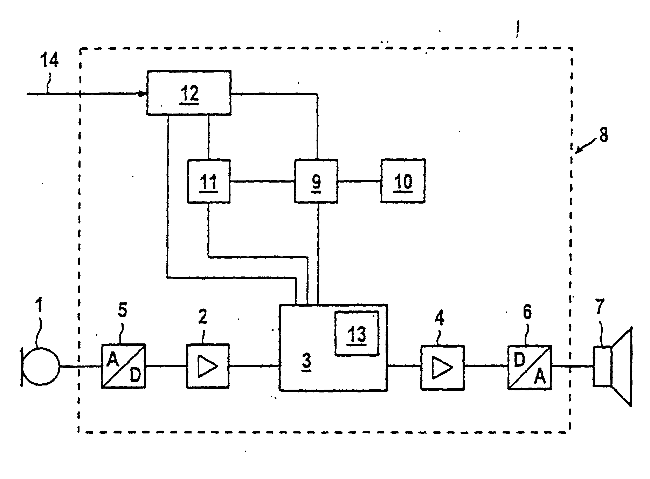

## Patentansprüche

1. Hörgerät mit einem Mikrofon (1), einer Signalverarbeitungseinheit (8), die ein Systemtaktelement (10) aufweist, und einem Hörer, wobei ein Detektorelement (12) zur Ermittlung von elektromagnetischen Störsignalen (14) und ein in Abhängigkeit von den erkannten Störsignalen konfigurierbares Filterelement (13) zur Unterdrückung der Störsignale vorhanden sind,
**dadurch gekennzeichnet, dass** ein Taktelement (11) zur Gewinnung der Frequenz des durch das Detektorelement (12) erfassten Störsignals (14) in der Signalverarbeitungseinheit (18) vorhanden ist und daß dieses Taktelement (11) zur Generierung der Systemtaktfrequenz des Hörgeräts ausgehend von der gewonnenen Frequenz des Störsignals (14) dient.

2. Hörgerät nach Anspruch 1,
**dadurch gekennzeichnet, dass** das Taktelement (11) eine PLL-Schaltung aufweist.

3. Hörgerät nach Anspruch 1 oder 2,
**dadurch gekennzeichnet, dass** ein Umschaltelement (9) zur Umschaltung zwischen dem Taktelement (11) und dem Systemtaktelement (10) vorgesehen ist.

4. Hörgerät nach einem der Ansprüche 1 bis 3,
**dadurch gekennzeichnet, dass** die Signalverarbeitungseinheit (8) ein digitales Signalprozessor-Element (3) umfasst.

5. Hörgerät nach Anspruch 4,
**dadurch gekennzeichnet, dass** das Filterelement (13) in das digitale Signalprozessor-Element (3) integriert ist.

6. Verfahren zur Unterdrückung von elektromagnetischen Störsignalen in einem Hörgerät mit einem Mikrofon (1), einer Signalverarbeitungseinheit (8) und einem Hörer (7), insbesondere in einem Hörgerät nach einem der Ansprüche 1 bis 5,
**gekennzeichnet durch** die Verfahrensschritte:
- Detektion von Störsignalen (14),
- Konfiguration eines Filterelements (13) in Abhängigkeit von den detektierten Störsignalen zur Unterdrückung der Störsignale,
- Ermittlung der Frequenz des Störsignals (14),
- Generierung der Systemtaktfrequenz des Hörgeräts ausgehend von der ermittelten Frequenz des Störsignals (14).

7. Verfahren nach Anspruch 6,
**dadurch gekennzeichnet, dass** die Störsignale bzw. Störfelder von Mobiltelefonen detektiert werden.

8. Verfahren nach Anspruch 6 oder 7,
**dadurch gekennzeichnet, dass** beim Betrieb des Hörgerätes mit Telefonspule die Netzfrequenz als Störsignal detektiert wird.

9. Verfahren nach einem der Ansprüche 6 bis 8,
**dadurch gekennzeichnet, dass** das Filterelement (13) als Kammfilter konfiguriert wird.

10. Verfahren nach einem der Ansprüche 6 bis 9,
**dadurch gekennzeichnet, dass** in der Signalverarbeitungseinheit abgespeicherte Koeffizientensätze zur geeigneten Konfiguration des Filterelements (13) verwendet werden.

## Claims

1. Hearing aid with a microphone (1), a signal processing unit (8) which has a system clock element (10), and a receiver, whereby a detector element (12) for detecting electromagnetic disturb signals (14) and a filter element (13) that can be configured dependent on the recognised disturb signals in order to suppress the disturb signals are provided, **characterised in that** a clock element (11) is provided in the signal processing unit (18) for acquiring the frequency of the disturb signal (14) detected by the detector element (12), and that this clock element (11) serves to generate the system clock frequency of the hearing aid on the basis of the acquired frequency of the disturb signal (14).

2. Hearing aid according to Claim 1, **characterised in that** the clock element (11) has a PLL circuit.

3. Hearing aid according to Claim 1 or 2, **characterised in that** a changeover element (9) for changing over between the clock element (11) and the system clock element (10) is provided.

4. Hearing aid according to one of Claims 1 to 3, **characterised in that** the signal processing unit (8) comprises a digital signal processor element (3).

5. Hearing aid according to Claim 4, **characterised in that** the filter element (13) is integrated into the digital signal processor element (3).

6. Method for suppressing electromagnetic disturb signals in a hearing aid with a microphone (1), a signal processing unit (8) and a receiver (7), particularly in a hearing aid according to one of Claims 1 to 5, **characterised by** the method steps:
- Detecting disturb signals (14),
- Configuring a filter element (13) dependent on the detected disturb signals for suppressing the disturb signals,
- Determining the frequency of the disturb signal (14),
- Generating the system clock frequency of the hearing aid on the basis of the detected frequency of the disturb signal (14).

7. Method according to Claim 6, **characterised in that** the disturb signals or noise fields of mobile telephones are detected.

8. Method according to Claim 6 or 7, **characterised in that** the network frequency is detected as a disturb signal when the hearing aid is operated by means of a telephone coil.

9. Method according to one of Claims 6 to 8, **characterised in that** the filter element (13) is configured as a comb filter.

10. Method according to one of Claims 6 to 9, **characterised in that** the coefficient sets stored in the signal processing unit are used for suitably configuring the filter element (13).

## Revendications

1. Prothèse auditive comportant un microphone (1), une unité de traitement de signal (8), qui contient un élément d'horloge de système (10), et un écouteur (7), un élément détecteur (12) étant prévu pour la détection de signaux parasites électromagnétiques (14) et un élément de filtrage (13) configurable en fonction des signaux parasites détectés étant prévu pour la suppression des signaux parasites, **caractérisée par le fait qu'**un élément d'horloge (11) est prévu dans l'unité de traitement de signal (8) pour la récupération de la fréquence du signal parasite (14) détecté par l'élément détecteur (12) et que cet élément d'horloge (11) sert à la production de la fréquence d'horloge de système de la prothèse auditive à partir de la fréquence récupérée du signal parasite (14).

2. Prothèse auditive selon la revendication 1, **caractérisée par le fait que** l'élément d'horloge (11) comporte un circuit PLL.

3. Prothèse auditive selon la revendication 1 ou 2, **caractérisée par le fait qu'**un élément de commutation (9) est prévu pour la commutation entre l'élément d'horloge (11) et l'élément d'horloge de système (10).

4. Prothèse auditive selon l'une des revendications 1 à 3, **caractérisée par le fait que** l'unité de traitement de signal (8) comprend un élément processeur de signal numérique (3).

5. Prothèse auditive selon la revendication 4, **caractérisée par le fait que** l'élément de filtrage (13) est intégré dans l'élément processeur de signal numérique (3).

6. Procédé pour la suppression de signaux parasites électromagnétiques dans une prothèse auditive comportant un microphone (1), une unité de traitement de signal (8) et un écouteur (7), en particulier dans une prothèse auditive selon l'une des revendications 1 à 5, **caractérisé par** les étapes suivantes :
- détection de signaux parasites (14),
- configuration d'un élément de filtrage (13) en fonction des signaux parasites détectés en vue de la suppression des signaux parasites,
- détermination de la fréquence du signal parasite (14),
- production de la fréquence d'horloge de système de la prothèse auditive à partir de la fréquence déterminée du signal parasite (14).

7. Procédé selon la revendication 6, **caractérisé par le fait qu'**on détecte les signaux parasites ou les champs parasites de téléphones mobiles.

8. Procédé selon la revendication 6 ou 7, **caractérisé par le fait que**, lors du fonctionnement de la prothèse auditive avec une bobine de téléphone, on détecte la fréquence de réseau comme signal parasite.

9. Procédé selon l'une des revendications 6 à 8, **caractérisé par le fait qu'**on configure l'élément de filtrage (13) comme un filtre peigne.

10. Procédé selon l'une des revendications 6 à 9, **caractérisé par le fait qu'**on utilise des ensembles de coefficients mémorisés dans l'unité de traitement de signal pour la configuration appropriée de l'élément de filtrage (13).
